# EUROPEAN PATENT SPECIFICATION

(11) **EP 1 598 688 B1**
(45) Date of publication and mention of the grant of the patent: **30.06.2010**
(21) Application number: 05011146.7
(22) Date of filing: 23.05.2005
(51) Int. Cl.: G02B 21/06, G02B 21/00, G02B 21/16, G01N 21/64, G06T 1/00

(54) **Fluorescence microscope**
Fluoreszenzmikroskop
Microscope à fluorescence

(30) Priority: 21.05.2004 JP 2004152544
(43) Date of publication of application: 23.11.2005
(73) Proprietor: Keyence Corporation, Osaka-shi, Osaka 533-8555 (JP)
(72) Inventor: Miki, Masayuki, Higashiyodogawa-ku Osaka-shi Osaka 533-8555 (JP)
(74) Representative: Zimmermann, Gerd Heinrich

(56) References cited:
- WO-A-03/098313
- US-A1- 2004 063 089
- US-B1- 6 414 805
- PATENT ABSTRACTS OF JAPAN vol. 2000, no. 07, 29 September 2000 (2000-09-29) -& JP 2000 098250 A (OLYMPUS OPTICAL CO LTD), 7 April 2000 (2000-04-07)
- PATENT ABSTRACTS OF JAPAN vol. 2002, no. 11, 6 November 2002 (2002-11-06) -& JP 2002 207177 A (NIKON CORP), 26 July 2002 (2002-07-26)
- PATENT ABSTRACTS OF JAPAN vol. 2000, no. 11, 3 January 2001 (2001-01-03) -& JP 2000 227556 A (JAPAN SCIENCE & TECHNOLOGY CORP), 15 August 2000 (2000-08-15)

## Description

The present invention generally relates to a fluorescence microscope. In particular it relates to a fluorescence microscope having a function of displaying an image of a specimen and a display method using fluorescence microscope system.

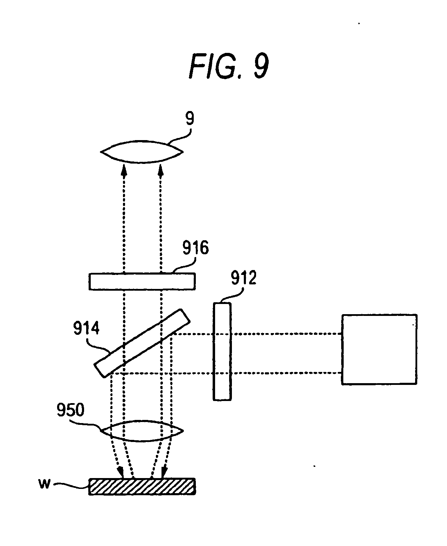

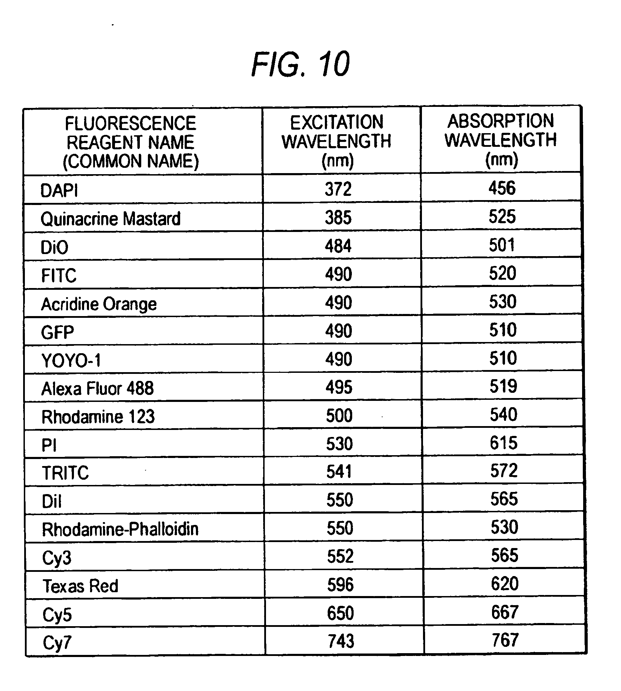

Conventionally, in order to observe the microstructure of a cell and localization of a molecule, a fluorescence microscope or a laser microscope has been used. On the fluorescence microscope, a fluorescent molecule that is specifically bonded with a particular target molecule in the specimen is attached to the target molecule in order to observe distribution and behavior of the target molecule. The fluorescent molecule is also called a fluorescent probe and includes, for example, a fluorescent molecule covalently bonded with an antibody of target protein. An example of an epi microscope is described below based on Fig. 9. Epi illumination is an illumination method where source light is illuminated through an objective lens 950 and a fluorescence from a specimen is observed through the objective lens 950. Illumination light (excitation light) and observation light (fluorescence) use the same optical path of the objective lens 950 that also serves as a condenser. In Fig. 9, in order to attain observation using epi illumination, the epi fluorescence microscope uses a dichroic mirror 914. The dichroic mirror 914 is set in a box-shaped body generally called a dichroic cube (filter set) together with an excitation filter 912 and an absorption (barrier) filter 916. Light having an unwanted wavelength is cut off from the illumination light of a light source by the excitation filter 912. Only light having a wavelength that the fluorescent molecule of a fluorescent dye can absorb is transmitted through the excitation filter 912. This attenuates the background light as an obstacle to observation. The excitation light is orthogonally reflected on the dichroic mirror 914 tilted by approximately 45 degrees with respect to an optical axis and reaches the specimen W through the objective lens 950. The fluorescence emitted from the specimen W advances in the direction opposite to the excitation light and reaches the dichroic mirror 914 through the objective lens 950. The dichroic mirror 914 reflects light having a wavelength below a specific wavelength and transmits the remaining light, so that a fluorescence passes through the dichroic mirror. After transmitting the fluorescence, the dichroic mirror 914 cuts the wavelength other than the target fluorescence by way of the absorption filter 916 to provide the possible darkest background and guides the transmitted light to an eye lens 9 (refer to JP-A-2000-227556). Here, as combinations of the fluorescent pigments introduced into the specimen and the filters, a list of combinations of typical fluorescent pigments, excitation filters, and absorption filters is shown in FIG.10. In FIG.10, reagent names (common names) of the fluorescent pigments and the wavelengths of the excitation light and the wavelengths of the absorption light represented by major peak values in the bandwidth are given.
Meanwhile, in the recent fluorescent observation, the multicolor fluorescent method that causes to dye and express a plurality of fluorescent pigments is employed to trace a plurality of substances in the specimen. In the above fluorescence microscope, the fluorescent observation is executed by fitting the filter set in response to the fluorescent pigments, and thus only the monochromatic fluorescent observation can be executed. As the method of executing the multicolor fluorescent observation by utilizing the fluorescence microscope, there are the method of using the dual/triple bandpass filter, which makes it possible to observe simultaneously a plurality of fluorescent pigments, after the imaging element such as the CCD camera, or the like is fitted onto the fluorescence microscope, the method of using the single-path (monochromatic) filter set, which corresponds to the applied fluorescent pigments respectively, while switching them selectively, and the like. However, in the method of using the dual/triple bandpass filter, since the available combination of the fluorescent pigments is restricted due to the characteristic of the filter set, a margin of choice is restricted. That is, there is the problem that the available cases are limited. Also, there is the problem that, since a plurality of colors are passed, the color separation characteristic is worsened and thus the crosstalk is generated. In addition, there is the problem that the monochromatic image cannot be observed.

In contrast, in the method of using the single-path filter set while switching them, the image is taken every filter set and then these taken images are superposed in use. For example, in the case of tricolor fluorescence, since the image is taken three times, not only the monochromatic image can be observed but also the synthesized image of them can be observed. However, since the images must be synthesized after the image is taken every color, such images can be checked merely after the taking of the image. Therefore, it is impossible to observe in real time what superposition is given by respective colors. Also, there is the problem that the filter set must be switched manually one by one to take the image every filter set and thus the operation becomes complicated.

For example, document US 2004/063089 describes an intracellular-reaction measuring apparatus for measuring intracellular reactions by the use of a specimen in which a plurality of cell colonies are contained in a non-contact state. The apparatus includes specifying means in which the intensity of first light emitted from the specimen in accordance with the presence of a stated protein is detected to specify, of the plurality of cell colonies, a noted colony containing cells where the stated protein is present; and selection means in which the intensity of second light emitted from the specimen in accordance with the intracellular reactions is detected to select, of the detected intensity of the second light, the intensity of the second light emitted from the noted colony.. Thereby, an excitation filter, an dichroic mirror, and a fluorescence filter (generically called "filter set") are set switchable.

Meanwhile, as the microscope that is capable of forming both the monochromatic image and the superposed image in real time, the laser microscopes such as the confocal laser microscope, the multiphoton excitation laser microscope, and the like have been developed. The laser microscope records a spatial distribution of the fluorescence on a focal plane by scanning the specimen surface with the laser, and then reproduces slice images by processing the image by a computer. In the confocal laser microscope, the laser light is irradiated onto the specimen by reflecting the laser light emitted from a point light source by means of the dichroic mirror that reflects the wavelength of the laser light, and then focusing the laser light by means of the objective lens. The fluorescence emitted from the fluorescent molecule, which is excited by the single photon excitation caused by the laser light, is passed through the dichroic mirror that passes the wavelength of the fluorescence and then focused by the lens, and also is passed through a confocal pinhole and then detected by the detector constructed by the photomultiplier, or the like. According to such basic configuration, the fluorescent molecule in the optical path in the specimen, along which the laser light is irradiated, is excited by scanning the laser light two-dimensionally by virtue of the X-Y scanning mirror. As a result, when only the fluorescence, which passed through the confocal pinhole, out of the fluorescence emitted from the excited fluorescent molecule is received by the detector and then the image processing is applied to such fluorescence by the computer, the fluorescent tomogram on the focal plane of the specimen can be derived. Also, when images of respective sections are obtained while changing the focal plane and then the image processing is applied to such images, the three-dimensional image of the specimen can be derived.

For example, US 2005/179892 describes an arrangement for the analysis of fluorescing samples in an image-generating microscope system, preferably a laser scanning microscope, wherein the sample is scanned and a dispersive splitting of the radiation coming from the sample is carried out during the scanning, wherein the split radiation is detected by at least one line of detector elements in a wavelength-dependent manner, a selection of two-dimensional or three-dimensional sample parts which correspond to pre-stored two-dimensional or three-dimensional geometric objects or the like is carried out based on the recorded and stored intensity distribution of at least one of these detection elements and/or at least one other detection element for the radiation reflected from the sample by image processing, and an analysis of the spectral signature and/or spatial spectral sequence is carried out for at least a portion of these sample regions with respect to the fluorescence markers arranged thereon. Further, the image of n channels and a color coded multi-channel image can be displayed.

However, there exists the problem that, since the laser light is used as the excitation light source in the laser microscope, the excitation light is very strong and thus the specimen is considerably damaged when the excitation light is irradiated onto the specimen, so that the living cells are damaged or the fading of the fluorescent color is caused. In particular, the extent of damage gets worse every time when the scanning is repeated. Also, since the laser as the excitation light source is the single-wavelength light, the laser units must be prepared as many as the number of fluorescent lights to be excited. Thus, there also exists the problem that the system becomes expensive. In particular, the laser must be exchanged periodically and thus a heavy burden of the running cost or the cost of maintenance is imposed. For this reason, the approach capable of realizing the multicolor fluorescent method simply not by using the laser microscope but by using the inexpensive fluorescence microscope is expected.

The present invention intends to overcome at least some of the above problems.

It is an object of the present invention to provide a fluorescence microscope capable of realizing the multicolor fluorescent observation in almost real time and a display method using a fluorescence microscope system. The object is solved by the fluorescence microscope according to independent claim 1, and the observation method according to independent claim 13.

Further advantages, features, aspects and details of the invention are evident from the dependent claims, the description and the drawings.

In order to attain the above object, a fluorescence microscope of the present invention comprises plural types of filter sets including a combination of a predetermined excitation filter, a dichroic mirror, and an absorption filter as optical members constituting an optical system; a filter switch portion for switching the filter sets at a predetermined timing; a switching set portion for setting a timing at which the filter switch portion switches the filter sets; an imaging portion for taking an image of a specimen as an observation object by using the filter sets that are set on an optical path of the optical system by the filter switch portion; a display portion having a plurality of image display areas on which the image taken by the imaging portion is displayed respectively a filter selecting section for selecting at least two filter sets from a plurality of filter sets and adapted for user designated filter sets; and a control portion for generating a superposed image that is formed by superposing the image taken by the imaging portion. This fluorescence microscope is constructed such that the image taken by using any filter sets can be displayed in at least an area of the image display areas, and the superposed image that is formed by superposing the image taken by using any filter sets respectively can be displayed in another area of the image display areas. Accordingly, the images such as the monochromatic fluorescent image taken by using each filter set, etc. and the superposed image formed by superposing these images in a multiple mode can be displayed automatically, and thus the observation can be easily made by comparing these images.

Also, another fluorescence microscope of the present invention comprises plural types of filter sets including a combination of a predetermined excitation filter, a dichroic mirror, and an absorption filter as optical members constituting an optical system; a filter switch portion for switching the filter sets at a predetermined timing; a switching set portion for setting a timing at which the filter switch portion switches the filter sets; an imaging portion for taking an image of a specimen as an observation object by using the filter sets that are set on an optical path of the optical system by the filter switch portion; a display portion having a plurality of image display areas on which the image taken by the imaging portion is displayed respectively a filter selecting section for selecting at least two filter sets from a plurality of filter sets and adapted for user designated filter sets; and a control portion for generating a superposed image that is formed by superposing the image taken by the imaging portion. This fluorescence microscope is constructed such that the imaging portion takes the image via every filter set in synchronism with a timing which is set by the switching set portion and at which the filter switch portion switches the filter sets, and then the taken image is automatically updated and displayed in the image display areas. Accordingly, the latest image obtained by updating the image, including the superposed image can be displayed automatically every filter set.
In addition, another fluorescence microscope of the present invention comprises plural types of filter sets including a combination of a predetermined excitation filter, a dichroic mirror, and an absorption filter, as optical members constituting an optical system; a filter switch portion for switching the filter sets at a predetermined timing; a switching set portion for setting a timing at which the filter switch portion switches the filter sets; an imaging portion for taking an image of a specimen as an observation object by using the filter sets that are set on an optical path of the optical system by the filter switch portion; a display portion for displaying the image taken by the imaging portion; a specimen load portion for loading a specimen thereon; a height adjustment portion for changing a distance between the specimen load portion and the optical system in an optical axis direction; a height specify portion for specifying a moving range and a moving width as conditions applied when the height adjustment portion changes the distance; a memory portion for storing the image taken by the imaging portion together with positional information every predetermined position in the optical axis; and a control portion for synthesizing a plurality of images stored in the memory portion based on the positional information to generate a stack image having three-dimensional information. This fluorescence microscope is constructed such that the image can be taken by the imaging portion in respective positions while changing a distance between the specimen load portion and the optical system in the optical axis direction by the height adjustment portion under conditions that are specified by the height specify portion, and then the stack image that is synthesized by the control portion based on taken images can be displayed on the display portion. Accordingly, the three-dimensional image having a depth in the optical axis direction can be generated under desired conditions, and the expressed locations, etc. of the fluorescent dye can be observed cubically to get a depth in the multicolor fluorescent observation.
Further, another fluorescence microscope of the present invention further comprises a gain controlling section for controlling electrically a quantity of fluorescent light of the sensed specimen such that a lightness of the image taken by the imaging portion by using the filter sets exceeds a predetermined value. Accordingly, for example, in case a quantity of fluorescent light of the specimen is small, a lightness of the image can be maintained constant by controlling a gain of a sensed signal sensed by the imaging portion. Therefore, even when a switching time required for the switching portion is short and the exposure time is short, the bright image can be obtained by increasing the gain of the signal. In particular, the image that can maintain the constant signal irrespective of the switching time interval can be obtained.
Furthermore, another fluorescence microscope of the present invention further comprises a speed control portion for controlling an update speed of the image that is displayed on the display portion. Accordingly, a desired image such as a smooth image that is obtained at a high frame rate by adjusting a speed at which the drawing on the display portion is updated, an image that has a good S/N ratio by suppressing the frame rate, or the like can be formed.
Besides, another fluorescence microscope of the present invention further comprises a layout portion for allocating an area, on which the image was taken by using predetermined filter sets is displayed, to a desired area of the image display areas. Accordingly, the user can display the images taken by using the desired filter sets in the desired locations to compare them mutually, and then select arbitrarily the image in answer to the observed object.
Moreover, another fluorescence microscope of the present invention further comprises a filter-set selecting section for selecting the filter set used for the image, which is to be displayed in each image display area on the display portion, from a plurality of filter sets. Accordingly, the user can choose any filter set through which the user wishes to get the image, and also the process and the drawing update speed can be accelerated correspondingly because the imaging operations using other filter sets can be omitted by displaying only the desired fluorescent color. In addition, an auto mode in which the imaging and the update of respective image display areas on the display portion are repeated while switching each of all filter sets automatically and a manual mode in which only the imaging and the image display update associated with the filter set being designated by the user are repeated can be switched.

Moreover, another fluorescence microscope of the present invention further comprises an image adjustment portion for controlling at least any of image control parameters of a position, a height, and a magnification applied to a scrolling, to control the image displayed on the display portion. Accordingly, the user can carry out the scrolling executed by changing the position in the XY-directions, the focusing executed by changing the height in the Z-direction, and the like while checking the image. Also, since the image whose image control parameters are controlled by the image adjustment portion can be updated on the display portion in almost real time, the user can check quickly the image on which the adjusted settings are reflected with the eye, and thus the user can decide easily the view field.
Moreover, in another fluorescence microscope of the present invention, each of a plurality of filter sets includes a monochromatic filter set that corresponds to any fluorescent color of plural types of fluorescent dyes introduced into the specimen respectively. For example, a combination such as RGB, CMY, or the like can be employed appropriately in response to the specimen and the fluorescent pigment. The present invention can be utilized preferably in the multicolor fluorescent observation in which the fluorescent color is observed by introducing a plurality of fluorescent dyes having different fluorescent colors into the specimen and exciting the specimen by the excitation light.
Moreover, another fluorescence microscope of the present invention further comprises a color correction portion for adjusting an intensity of a signal that is acquired by using a particular filter set. Accordingly, the observation of the interest part can be easily made without disturbance of other fluorescent colors by adjusting an intensity of a particular color component.
Moreover, in another fluorescence microscope of the present invention, an indicator indicating a current operation condition is displayed in every image display area. Accordingly, the user can check the operating condition such as a screen updating condition, a still condition, a superposing condition, or the like every image display area by the indicator.
Moreover, in another fluorescence microscope of the present invention, optical paths of the specimen loading portion and the optical system are arranged in a darkroom space that is shielded from a disturbance light. Accordingly, since the fluorescent observation can be made in the darkroom state, the fluorescence microscope itself can be employed without the provision of the darkroom and thus the fluorescence microscope becomes easier to handle.
Moreover, in another fluorescence microscope of the present invention, the imaging portion includes light receiving elements that are arranged two-dimensionally. Accordingly, the scanning is not needed unlike the laser microscope, and the image of one screen can be acquired at a time. Preferably the light receiving element is composed of CCD.
Moreover, in another fluorescence microscope of the present invention, an excitation light source for exciting a fluorescent substance contained in the specimen is formed of an ultraviolet light-emitting diode. The ultraviolet light-emitting diode (UVLED) has a low power consumption, a high efficiency, and a long lifetime, and has a high reliability because of no disconnection of the filament, and can contribute to reduction in cost and size because the time and labor required for the maintenance of the fluorescent microscope can be saved.
Moreover, a fluorescence microscope of the present invention comprises an excitation filter, a dichroic mirror, and an absorption filter as optical members constituting an optical system; an excitation light source; an objective lens; an imaging lens; an imaging portion; and a display portion having a plurality of image display areas on which the image was taken by the imaging portion is displayed respectively. This fluorescence microscope is constructed such that plural sets of the excitation filter, the dichroic mirror, and the absorption filter are provided switchably respectively, a corresponding combination of the excitation filter, the dichroic mirror, and the absorption filter is selected and switched in response to a desired excitation light by which an observation is to be made, and then the image is taken by the imaging portion, a corresponding combination of the excitation filter, the dichroic mirror, and the absorption filter is changed automatically and switched sequentially every different excitation light, and then the taken image is displayed in a plurality of image display areas of the display portion respectively, and a superposed image that is formed by superposing the images taken by using any filter sets is displayed in at least one area of the image display areas. Accordingly, the filter and the dichroic mirror can be switched in operation without employment of the filter set.
Moreover, a fluorescence microscope of the present invention comprises plural types of filter sets including a combination of a predetermined excitation filter, a dichroic mirror, and an absorption filter, as optical members constituting an optical system; a filter switch portion for switching the filter sets at a predetermined timing; a switching set portion for setting a timing at which the filter switch portion switches the filter sets ; an imaging portion for taking an image of a specimen as an observation object by using the filter sets that are set on an optical path of the optical system by the filter switch portion; and a control portion for generating a superposed image that is formed by superposing the image taken by the imaging portion. This fluorescence microscope is constructed such that the imaging portion takes the image via every filter set in synchronism with a timing, which is set by the switching set portion and at which the filter switch portion switches the filter sets, to generate the image taken by using each filter set, and then the superposed image that is formed by superposing the images taken by using a plurality of filter sets is generated sequentially. In this manner, according to a single body of the fluorescence microscope whose display portion is connected to the external device, the images such as the monochromatic fluorescent image taken by using each filter set, etc. and also the superposed image formed by superposing these images in a multiple mode can be acquired automatically.
Also, an observation method using a fluorescence microscope system of the present invention is a method of executing a multicolor fluorescent observation to observe fluorescent lights, by introducing a plurality of fluorescent dyes having different fluorescent colors into a specimen and then exciting the fluorescent dyes by an excitation light. This observation method using a fluorescence microscope system, comprises a step of selecting one filter set from plural different types of filter sets including combination of an excitation filter, a dichroic mirror, and an absorption filter as optical members constituting an optical system in response to the fluorescent dyes, and displaying an image taken by an imaging portion by using the filter sets in a predetermined designated image display area out of a plurality of image display areas on a display portion; and a step of taking the image by using another filter set switched by a filter switch portion and displaying the image in other designated image display area similarly, and also generating a superposed image on which an already-taken image and a newly-taken image are superposed and then displaying the superposed image in a predetermined superposed image display area. Then, respective images that are displayed in the image display area and the superposed image display area are updated sequentially by repeating the superposed image displaying step, so that a monochromatic image taken by using each filter set and the superposed image are observed simultaneously in almost real time. Accordingly, the images such as the monochromatic fluorescent image taken by using each filter set, etc. and the superposed image formed by superposing these images in a multiple mode can be displayed automatically, and thus the observation can be easily made by comparing these images.
Also, an observation method using a fluorescence microscope system of the present invention is a method of executing a multicolor fluorescent observation to observe fluorescent lights, by introducing a plurality of fluorescent dyes having different fluorescent colors into a specimen W and then exciting the fluorescent dyes by an excitation light. This observation method using the fluorescence microscope system, comprises a step of deciding a view field of an observation object, and setting a moving range and a moving width by which a distance between a specimen loading portion, on which the specimen is loaded, and an optical system in an optical axis direction is changed; a step of changing a distance in the optical axis every moving width according to the setting, selecting one filter set in each position from plural different types of filter sets including combination of an excitation filter, a dichroic mirror, and an absorption filter as optical members constituting an optical system in response to the fluorescent dyes, storing the image taken by an imaging portion using the filter set in a memory portion, generating a superposed image, which is formed by superposing the images acquired sequentially every filter set, by repeating an operation that stores the image taken similarly while switching the filter set to another filter set in the memory portion, and storing the superposed image together with positional information in the optical axis direction in the memory portion; and a step of repeating the step of generating the superposed image in every position, generating a stack image having three-dimensional information by synthesizing resultant superposed images finally based on the positional information, and displaying the stack image on a display portion. Accordingly, the three-dimensional image having a depth in the optical axis direction can be generated under desired conditions, and the expressed locations, etc. of the fluorescent dye can be observed cubically to get a depth in the multicolor fluorescent observation.
Also, a fluorescence microscope image display program is described for displaying an image by operating a fluorescence microscope system including executing a multicolor fluorescent observation to observe fluorescent lights, by introducing a plurality of fluorescent dyes having different fluorescent colors into a specimen and then exciting the fluorescent dyes by an excitation light. This fluorescence microscope image display program causes a computer or a fluorescence microscope system to execute a function of selecting one filter set from plural different types of filter sets including combination of an excitation filter, a dichroic mirror, and an absorption filter as optical members constituting an optical system in response to the fluorescent dyes, and displaying an image taken by an imaging portion by using the filter sets in a predetermined designated image display area out of a plurality of image display areas on a display portion; and a function of taking the image by using another filter set switched by a filter switch portion and displaying the image in other designated image display area similarly, and also generating a superposed image on which an already-taken image and a newly-taken image are superposed and then displaying the superposed image in a predetermined superposed image display area O. Then, respective images that are displayed in the image display area G and the superposed image display area O are updated sequentially by repeating the superposed image displaying step, so that a monochromatic image taken by using each filter set and the superposed image are observed simultaneously in almost real time. Accordingly, the images such as the monochromatic fluorescent image taken by using each filter set, etc. and the superposed image formed by superposing these images in a multiple mode can be displayed automatically, and thus the observation can be easily made by comparing these images.
In addition, another fluorescence microscope image display program is described for displaying an image by operating a fluorescence microscope system including executing a multicolor fluorescent observation to observe fluorescent lights, by introducing a plurality of fluorescent dyes having different fluorescent colors into a specimen W and then exciting the fluorescent dyes by an excitation light. This fluorescence microscope image display program causes a computer or a fluorescence microscope system to execute a function of deciding a view field of an observation object, and setting a moving range and a moving width by which a distance between a specimen loading portion, on which the specimen is loaded, and an optical system in an optical axis direction is changed; a function of changing a distance in the optical axis every moving width according to the setting, selecting one filter set in each position from plural different types of filter sets including combination of an excitation filter, a dichroic mirror, and an absorption filter as optical members constituting an optical system in response to the fluorescent dyes, storing the image taken by an imaging portion using the filter set in a memory portion, generating a superposed image, which is formed by superposing the images acquired sequentially every filter set, by repeating an operation that stores the image taken similarly while switching the filter set to another filter set in the memory portion, and storing the superposed image together with positional information in the optical axis direction in the memory portion; and a function of repeating the function of generating the superposed image in every position, generating a stack image having three-dimensional information by synthesizing resultant superposed images finally based on the positional information, and displaying the stack image on a display portion. Accordingly, the three-dimensional image having a depth in the optical axis direction can be generated under desired conditions, and the expressed locations, etc. of the fluorescent dye can be observed cubically to get a depth in the multicolor fluorescent observation.
Also, a computer-readable recording medium and a storing device stores the fluorescence microscope image display program therein. Also, various media that are able to store the program therein, e.g., magnetic disc, optical disc, magneto-optical disc, semiconductor memory, and others such as CD-ROM, CD-R, CD-RW, flexible disc, magnetic tape, MO, DVD-ROM, DVD-RAM, DVD-R, DVD+R, DVD-RW, DVD+RW, Blu-ray, HD, DVD (AOD), etc. are contained in the above recording medium. Also, in addition to the program that is stored in the recording medium and distributed, the program that is downloaded via the network line such as Internet, or the like and distributed is contained in the above program. In addition, the above storing device contains the general-purpose or dedicated device into which the above program is installed in its executable state in a mode of software, firmware, or the like. Further, respective processes or functions contained in the program may be executed by the program software that can be executed by the computer, otherwise processes in respective portions may be realized by hardware such as predetermined gate arrays (FPGA, ASIC), or the like or mixed formats of the program software and partial hardware modules that embody a part of elements of the hardware.

According to the fluorescence microscope, the display method using the fluorescence microscope system, the fluorescence microscope image display program, and the computer-readable recording medium and the storing device, the superposed image in which respective fluorescent colors are superposed can be displayed/updated in almost real time in the multicolor fluorescent observation. This is because the switching of the filter set can be automated and the superposed image of respective images can be formed in seriatim at the same time, and also such superposed image can be displayed on the display portion. Since this imaging process can be repeated automatically, the drawing of respective images can be continued while being updated in almost real time. As a result, the quasi-real time observation as the multicolor fluorescent observation that only the laser microscope can carry out in the related art can be realized by the fluorescence microscope, and thus the excellent multicolor fluorescent observation that inflicts little damage on the specimen can be carried out at a lower cost.
FIG.1 is a block diagram showing a fluorescence microscope according to an embodiment of the present invention.
FIG.2 is a block diagram showing a fluorescence microscope system according to another embodiment of the present invention.
FIG.3 is an image view showing an example of a display screen of a display portion.
FIG.4 is an image view showing an example of a setting screen of a fluorescence microscope image display program according to an embodiment of the present invention.
FIG.5 is a flowchart showing procedures of updating an image display.
FIGS.6A-6F are status transition diagrams showing the procedures of updating the image display.
FIG.7 is an image view showing an example of another setting screen of a fluorescence microscope image display program according to another embodiment of the present invention.
FIG.8 is a block diagram showing a control system of a fluorescence microscope according to an embodiment of the present invention.
FIG.9 is a block diagram showing an epi fluorescence microscope in the related art.
FIG.10 is a list showing typical fluorescent pigments and their excitation lights and fluorescent wavelengths.

Embodiments of the present invention will be explained with reference to the drawings hereinafter. In this case, the embodiments described in the following should be interpreted as mere illustrations of the fluorescence microscope and the observation method using the fluorescence microscope system which embody the technical ideas of the present invention. The present description should not be interpreted to restrict the fluorescence microscope or the observation method using the fluorescence microscope system to those described in the following. In order to clarify the explanation, in some cases sizes, positional relationships, etc. of the members shown in respective drawings are given in an exaggerated way. In addition, the same names and symbols denote the same or like members in the following explanation, and their detailed explanation will be omitted appropriately. Further, respective elements constituting the present invention may be actualized in a mode in which one member is used as a plurality of elements by constructing a plurality of elements by the same member, and conversely the functions of one member may be actualized by a plurality of members to take over a portion of them respectively.
In the present specification, the fluorescence microscope and the observation method using the fluorescence microscope system, are not limited to the system itself for operating, displaying, and setting the fluorescence microscope, and the system and the method that execute processes such as input/out, display, calculation, communication, and others in connection with the operation, display, setting, etc. of the fluorescence microscope based on the hardware. The system and the method that execute processes based on the software are also contained in the claims of the present invention. For example, electronic devices such as general-purpose or dedicated computer, workstation, terminal, mobile electronic device, etc., which make the image display itself of the fluorescence microscope and their associated processes possible by loading software, program, plug-in, object, library, applet, scriplet, complier, module, macro operated on a particular program, etc. into the general-purpose circuit or the computer, are also contained in at least any one of the fluorescence microscope and the observation method using the fluorescence microscope system of the present invention. Also, in the present specification, the program itself is contained in the fluorescence microscope system. Also, the present program is not limited to those that are used as a single body, and the present program is available by a mode that the program functions as a part of particular computer program, software, service, etc., a mode that the program functions when it is called at need, a mode that the program is offered as a service in the OS environment, etc., a mode that the program is permanently stationed at the environment and operated, a mode that the program is operated in the background, or as other aiding programs.

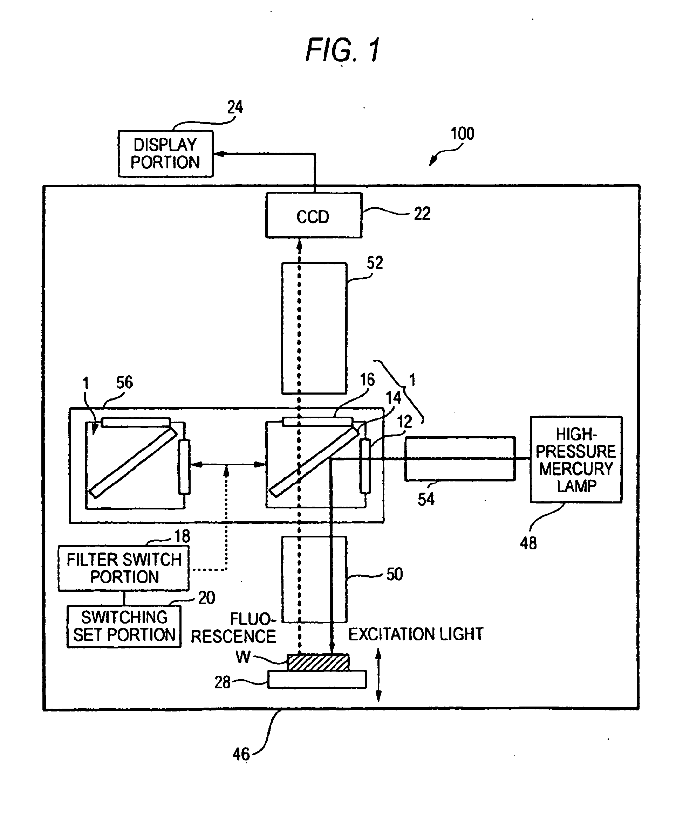

Fig. 1 shows a block diagram of a fluorescence microscope according to an embodiment of the invention. The following example pertains to a case where a plurality of fluorescent dyes (fluorescent pigments) are introduced into a specimen W (also called a test specimen or a sample) in order to dye the specimen and cause the specimen to develop in multiple colors for multicolor fluorescent observation. A fluorescence microscope 100 shown in Fig. 1 comprises an excitation light source 48, a collector lens 54, a filter set 1, an objective lens 50, an imaging lens 52, and an imaging portion 22. These members are arranged on a certain optical path. The excitation light source 48 emits excitation light to excite a fluorescent dye. For example, a high-pressure mercury lamp or a high-pressure xenon lamp is used. These lamps irradiate light having a wide wavelength. The excitation light source 48 may be a light-emitting diode that features low power consumption, compact design and high efficiency. A member of the excitation light source may be provided in a unit, and such units may be assembled to form a fluorescence microscope. The illumination light from the excitation light source 48 is formed into rays of light substantially parallel to each other by the collector lens 54. The rays of light are introduced as excitation light into the filter set 1. The collector lens 54 may be a fluorescence epi illumination lens in the case of epi illumination. While it is assumed that epi illumination is used to illuminate the specimen in the following example, the invention is also applicable to other illumination methods such as transmissive illumination and total epi illumination. Also, only the imaging portion 22 is illustrated in the example in FIG.1 and the eyepiece for the visual inspection is not provided, but it is needless to say that the visually inspecting mechanism can be provided. In this case, the fluorescent light passed through the imaging lens is switched selectively by utilizing the mirror, or the like to reflect or branch.
The filter set 1 is a combination of a single-pass filter that selectively transmits light having a wavelength fit for observation of a specific fluorescent dye and a mirror. As shown in Fig. 1, the filter set 1 comprises an excitation filter 12, an absorption filter 16 and a dichroic mirror 14. The filter set 1 comprises a plurality of types that are changeable. Each filter set 1 comprises a combination of the excitation filter 12, absorption filter 16 and dichroic mirror 14. By changing the filters or mirrors, different monochrome images may be taken. A plurality of filter sets 1 are set to a filter holder 56 and changed in a filter switch portion 18. The excitation light selected in the excitation filter 12 of the filter set 1 is reflected on the dichroic mirror 14, passes through the objective lens 50 and projected onto the specimen W. The objective lens 50 is also used as a condensing lens. The objective lens 50 can be exchanged for the purpose of the observation. A plurality of objective lenses 50 can be detachably attached via a screw, or the like or can be switched via a revolver, or the like.

The specimen W is loaded on a specimen loading portion 28. Normally the observation of the weak light specimen such as the fluorescent specimen, or the like is executed in a darkroom because a disturbance light must be eliminated. The fluorescence microscope 100 according to the present embodiment is arranged in a darkroom space 46 in which the optical paths in the specimen loading portion 28 and the optical system 10 are shielded from the disturbance light. If this darkroom space 46 is brought into its darkroom condition, the fluorescent observation can be carried out without the provision of the darkroom and thus the fluorescence microscope 100 becomes easier to handle. An XY stage, or the like can be utilized as the specimen loading portion 28 that can be moved in the X-axis and Y-axis directions. Also, if the specimen loading portion 28 can be moved in the vertical direction (Z-axis direction), the focus can be adjusted by changing a relative distance between the optical system 10 and the specimen loading portion 28.
The fluorescent dye, which corresponds to the irradiated excitation light, out of the fluorescent dye contained in the specimen W emits the fluorescence. This fluorescent dye is passed through the objective lens 50, then is incident on the filter set 1, and then is passed through the dichroic mirror 14. In this manner, the dichroic mirror 14 reflects the illumination light but pass the fluorescence therethrough. Then, the absorption filter 16 passes the fluorescence therethrough to absorb selectively optical components except the fluorescence such as the illumination light, or the like. The absorption filter 16 is also called a barrier filter, and is arranged on the fluorescent image forming surface side of the dichroic mirror 14. The light output from the filter set 1 is passed through the imaging lens 52 and is incident on the imaging portion 22. This imaging portion 22 is arranged in the conjugate position to the focal plane of the objective lens 50. The imaging portion 22 converts the fluorescence into an electric signal, and the image is generated based on this signal and displayed on a display portion 24. For this purpose, the imaging portion 22 is constructed by imaging elements, and semiconductor imaging elements in a CCD camera, or the like are preferably available. The CCD cameras are arranged two-dimensionally and can take one screen at a time not to scan sequentially the screen, unlike the laser microscope. Since the noise characteristic can be improved by cooling the CCD camera, the CCD camera having a cooling mechanism using a Peltier element, a liquid nitrogen, or the like may be employed. As described above, the fluorescence microscope can switch the single-path filter set 1 automatically by using the filter switch portion 18, and can display at a time both the monochromatic images taken by respective filter sets 1 and the superposed image obtained by superposing these images.

The filter set 1 includes a set of an excitation filter 12, an absorption filter 16 and a dichroic mirror 14 in a box-shaped body generally called a dichroic cube. A combination of a excitation filter 12, an absorption filter 16 and a dichroic mirror 14 of the filter set 1 is determined depending on the fluorescent dye introduced into the specimen W. A combination of single-pass bandpass filters is determined so that only the light having a desired wavelength component will be extracted and the remaining wavelength components rejected in order to allow correct observation of a color developing with a fluorescent dye. Thus, the filter set 1 used is determined depending on the fluorescent dye used. In general, the filter set 1 of different fluorescent colors is used. For example, a color combination such as RGB and CMY corresponding to fluorescence coloring matters may be used as required. Here, a combination of the filter set and the fluorescent pigment is decided depending on the fluorescent pigment, the excitation light, and the fluorescent wavelength, and is selected appropriately in response to the fluorescent observation based on a list shown in FIG.10, or the like. The plurality of filter sets 1 may be changeable by the filter switch portion 18. The plurality of filter sets 1 are set to a filter holder 56 and any one of the plurality of filter sets 1 is set on the optical path by the filter switch portion 18. The filter switch portion 18 may use a turret to change the filter set 1 in a motor-driven rotary fashion or sliding fashion. Control of the filter set 1 is set by the switching set portion 20. It is possible use the filer set 1 to change at a time a necessary set of an excitation filter 12, an absorption filter 16 and a dichroic mirror 14. Change operation may be made at a single section to facilitate high-speed operation and maintenance. Individual change means for individually changing a plurality of excitation filter, absorption filters and dichroic mirrors may be provided instead of using a filter set including a combination of an excitation filter, an absorption filter 16 and a dichroic mirror. Based on this configuration, respective change means may be controlled in an interlocked fashion to arrange a predetermined set of an excitation filter, an absorption filter and a dichroic mirror on the optical path. Further, it is possible to change an optical path by using a mirror thereby substantially change the filters for later image taking.

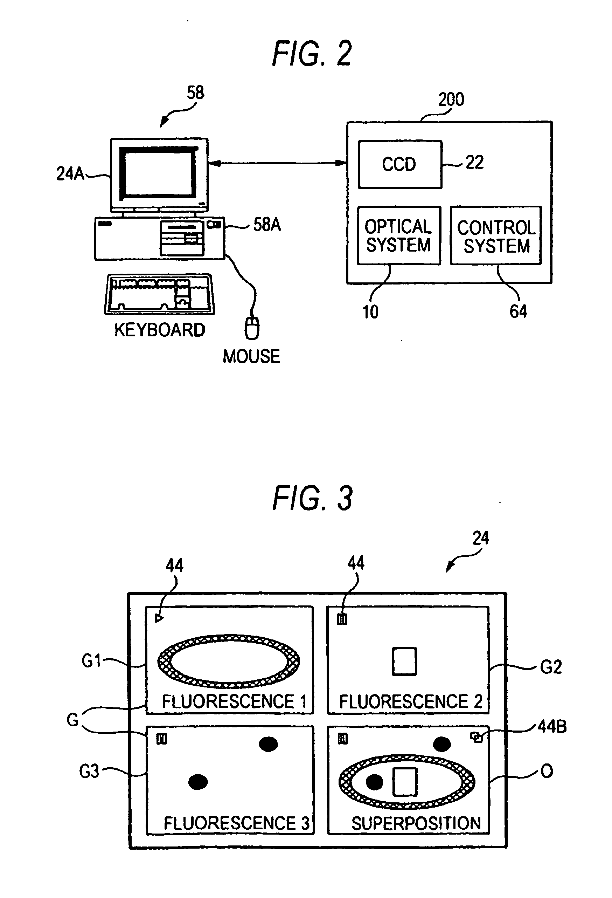

The display portion 24 is a display for displaying an image taken by the optical system 10. The display constituting the display portion 24 is a monitor that can display the image at a high resolution and may be a CRT or a liquid crystal display panel. The display portion 24 may be integrated into a fluorescence microscope or an externally connected monitor. Or, an external connection device 58 connected to a fluorescence microscope 200 may be used as a display portion as shown in Fig. 2. For example, in case a computer 58A is used as an external connection device 58, the monitor of the computer 58A may provide the function of the display portion. A plurality of display portions may be used for each of the fluorescence microscope 200 and the external connection device 58.

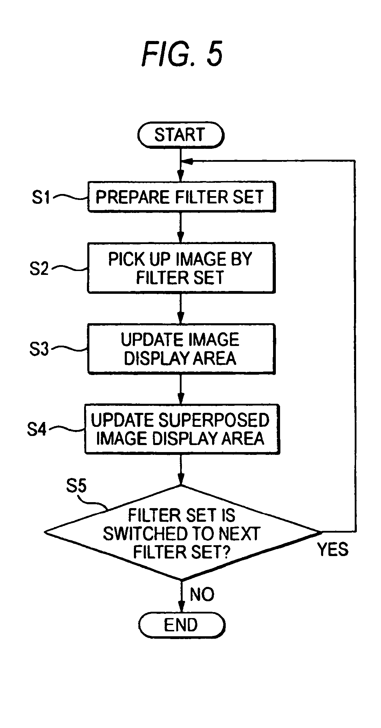

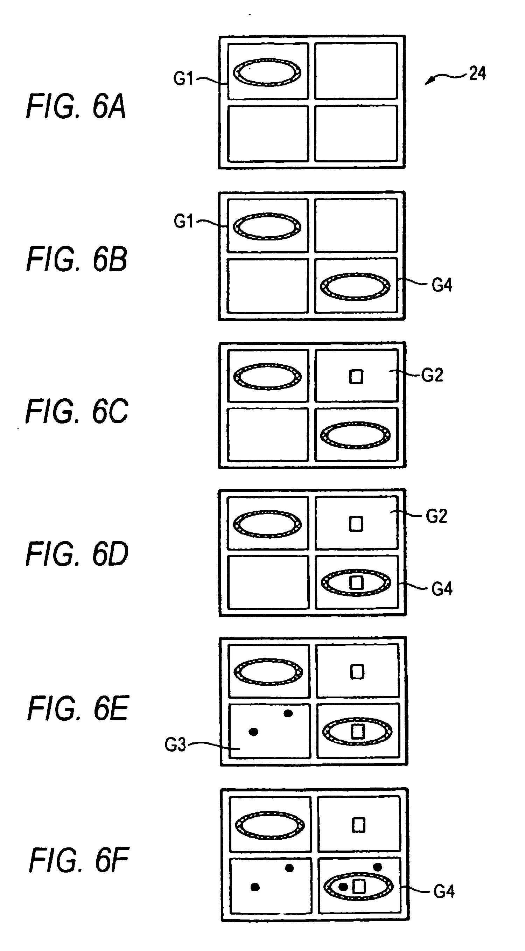

Next, an example of the display screen of the display portion 24 is shown in Fig. 3. As illustrated, the display portion 24 comprises a plurality of image display areas G. The display portion 24 simultaneously displays different images in the image display areas G for comparison. In particular, in this embodiment, one of the image display areas G is used as an superposed image display area O for displaying an superposed image where images observed using the filter sets are superposed one on another. This allows comparison of an image observed using a filter set and such an superposed image on the same screen. As mentioned later, in this embodiment, the images can be displayed virtually in real time, so that it is possible to readily observe the state of a specimen under various conditions. In the example of Fig. 3, total four image display areas G are provided, one of which is used as an superposed image display area O. The number of image display areas may be three or less or five or more. Preferably, the number of image display areas is the number of filters sets in the filter holder plus the number of superposed image area so that all the filter sets and an superposed image thereof can be observed on a single screen. It is of course possible to enlarge any selected screen or toggle between enlarges screens for filter sets or select an superposed image. It is not necessary to display all images on one screen. Images may be displayed in separate windows. In this way, image display practices may be changed as required in accordance with the number of filters, purpose of observation, and user's taste. In the example of Fig. 3, three filter sets corresponding to the fluorescent dyes 1 through 3 are loaded into the filter holder 56, and monochrome images taken while toggling between these sets and an superposed image where the monochrome images are superposed one on another are displayed.

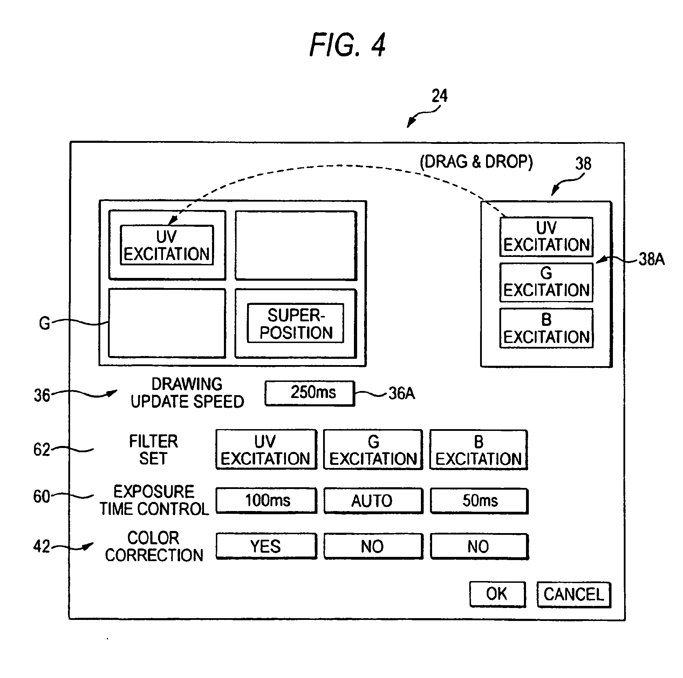

FIG.4 shows an example of a user interface screen of the fluorescence microscope image display program applied to set a display mode of the images that are taken by the fluorescence microscope. This program is installed into the computer 58A connected to the fluorescence microscope 200, as shown in FIG.2, and controls an operation of the monitor 24A and an operation of the fluorescence microscope 200. Thus, the monitor 24A receives image data taken by the fluorescence microscope 200 and acts as the display portion, and the fluorescence microscope 200 gets desired image displays in accordance with the setting. In this case, FIG.2 shows an example of the configuration, and the fluorescence microscope system of the present invention can utilize various configurations. For example, a control portion, an operation portion, a monitor, etc. may be provided to the fluorescence microscope itself and thus the setting and the operation can be completed in a stand-alone mode without connection of the external connection devices. Alternately, a plurality of fluorescence microscopes are connected to one computer and respective fluorescence microscopes can be operated in a cooperative mode or an independent mode.
In the set screen in FIG.4, the image display area G is arranged on the upper left portion and also a filter set group 38A indicating the filter set, which is set now in the fluorescence microscope, by the icons is arranged on the upper right portion. As shown in FIG.4, the layout of the filter set and the image display areas can be designed by selecting the desired filter set icon from the filter set group 38A arranged on the right side of the image display area G, then dragging the icon to the desired image display area G with the mouse, and then dropping the icon into the area. Because the layout can be designated visually in this way, the user can execute easily the setting that is easy to understand intuitively.
Next, procedures of updating the image display will be explained with reference to a flowchart in FIG.5 and a status transition diagram in FIGS.6A-6F hereunder. In this example, while switching three monochromatic filter sets 1A to 1C, the images are displayed and the superposed image is generated. First, a filter set is prepared in step S1 after initializations of respective portions are carried out as the case may be. Here, the filter set 1A is set in the filter holder. Then, the image is taken by using the filter set in step S2, and the process goes to step S3 where the image display area G is updated by using the taken image. Here, as shown in FIG.6A, the image taken by using the filter set 1A is displayed in the image display area G1 on the display portion 24. Subsequently, the superposed image display area is updated in step S4. Here, since the area is in its initialized state, the same image as that in the image display area G1 is displayed in the image display area G4, as shown in FIG.6B. Then, in step S5, it is decided whether or not the filter set is switched to the next filter set. For example, the imaging is repeated predetermined number of times while counting up the switching number of the filter set, otherwise the process goes back to step S1 and then above steps are repeated until the fluorescence microscope receives an imaging halt instruction. When the procedures reach the stage at which the switching of the filter set is not needed, the process is ended. Here, assume that the process is continued, the process goes back to step S 1 and then the filter is switched to the filter set 1B as the next filter set by the filter switching portion. Then, the image is taken in step S2, and also the image taken by using the filter set 1B in step S2 is displayed in the image display area G2 in step S3, as shown in FIG.6C. Then, in step S4, the superposed image obtained by superposing the image in the image display area G2 on the image in the image display area G4 is synthesized by the control portion, and also the image in the image display area G4 is updated by the synthesized superposed image (FIG.6D). Then, the filter set is switched to the filter set 1C via steps S5, S1, then the image is taken in steps S2 to S3, and then the image taken via the filter set 1C is displayed in the image display area G3 (FIG.6E). Then, in step S4, the image in the image display area G4 is updated by superposing the image in the image display area G3 on the image that is being displayed in the image display area G4 (FIG.6F). In this event, the superposing process and the display of the superposed image executed after the monochromatic image is displayed, as shown in FIGS.6A-6F, are not limited in order. First the superposing process and the display can be executed, and then the monochromatic image may be displayed.
With the above, as shown in FIG.3, the monochromatic images taken via the filter sets 1A to 1C and their superposed image can be displayed on the same screen of the display portion 24. Also, the above operations are executed automatically. More specifically, since a series of processes such as the switching of the filter set, the start of the imaging, the update of the taken image, and so on are carried out automatically on the fluorescence microscope side, the user can get various images extremely easily without special operations such as the filter switching operation, the display switching operation, etc. In particular, the troublesome manual operations such as the switching of each filter set, the imaging every filter set, the synthesis of the taken images by the computer, and the like are needed in the related art whereas the easy-use operation environment can be realized in the present embodiment by saving drastically these processes.
Also, the image displayed on the display portion 24 can be updated in almost real time by repeating the above processes. Thus, the real-time observation that is impossible for the fluorescence microscope in the related art can be achieved. In above steps, the process goes back to step S 1 again at a point of time when the image in FIG.6F is obtained, then the filter set 1C is switched to the filter set 1A, then the monochromatic image is newly taken by using the filter set 1A in steps S2 to S3, and then the image in the image display area G1 is updated by the new image. Also, in step S4, the superposed image is generated by superposing the new image on the images that have already been taken via the filter sets 1B, 1C and then the image in the image display area G4 is updated. At this time, in case the view field being observed with the fluorescence microscope is changed from the stage in FIG.6A, the image in display is updated as the newest image taken from the changed view field. In other words, in case the user makes any change in the displayed image, e.g., the user changes the position (x, y-coordinates) of the view field, the user adjusts the focus (z-coordinate), the user increases/decreases the magnification, and the like, the image taken newly under the changed conditions is displayed on the display portion 24. As a result, since the image displayed on the display portion 24 is updated following upon such operation even when the user executes the scrolling or the focusing, such an excellent feature of the present invention can be achieved that the user can confirm the change made in the display image in almost real time. In the related art, the real-time observation in such multicolor fluorescent observation can be made in the multi- scan image that is formed by using the expensive confocal laser microscope, but such real-time observation can be made by the inexpensive fluorescence microscope because the image must be taken individually while exchanging the filter set. In the present embodiment, the quasi-real time display update can be realized by the automatic switching of the filter set and the imaging/superposing processes executed in synchronism with such switching.
Now, the "quasi-real time" means that a slight display delay exists in the displaying operation. This is because a plurality of filter sets are switched sequentially and the imaging process and the image superposing process are executed every switching and therefore the image displayed via these processes is delayed slightly from a time point of the user's operation. The extent of time delay depends on a mechanical processing speed required to switch the filter set, the image generating process, the superposing process, etc. In particular, when the specimen having a dark excitation light is observed, an exposure time of the imaging portion 22 must be prolonged to get the bright image and therefore the delay tends to increase.

Therefore, in the present embodiment, in order to shorten such exposure time, a process of amplifying a signal gain is executed by a gain controlling section. More concretely, when a signal level required to get a brightness at a predetermined level cannot be obtained at the time of image formation, the control portion 26 serving as the gain controlling section amplifies an overall signal level. For example, in the case where an exposure time of 2 second is needed to get a signal level necessary for the CCD camera constituting the control portion 26, the control portion 26 amplifies four times the sensed signal when the filter set 1 can be switched in 0.5 second. Accordingly, a short exposure time can be made up and thus the image that maintains the brightness at a predetermined level can be acquired even when a short-time switching is applied. However, there exists the problem that, since a noise component is increased relatively by amplifying the gain, a sensitivity is worsened when an amplification level is increased. Therefore, if the exposure time is adjusted in response to the specimen, the fluorescent dye, and the observation conditions, the appropriate image display that takes account of a balance between an image update speed and an S/N ratio can be carried out. In the present embodiment, an exposure time control portion 60 by which the user can adjust the exposure time is provided.

In the example in FIG.4, as the exposure time control portion 60, switches for controlling the exposure time every filter set are provided under a filter set display box 62. The user chooses the exposure time among prescribed choices every filter set or points directly the exposure time respectively. Also, it is possible to cause the system side to calculate the optimum exposure time and set it automatically. In the example in FIG.4, the exposure time can be set automatically by pointing "auto". As described above, even when the exposure time is shortened, a quantity of light can be maintained at a predetermined level by the gain controlling section. In addition, since a shooting time can be reduced by shortening the exposure time, the display made at an accelerated frame rate in the drawing update can be realized. Further, since an excitation time can be shortened, the damage on the fluorescent specimen ca be suppressed and thus the specimen can be protected from the discoloration.

An update speed at which the image is drawn is controlled by a speed control portion 36. The control of the filter switching portion 18 is set by the switching set portion 20 but the filter set switching operation is executed as the mechanical operation, so that an accelerated drawing update speed depends on this switching operation. Therefore, if the switching time of the filter set is controlled by the speed control portion 36, the drawing update speed can also be set. In this case, the setting of the switching set portion 20 is varied by the speed control portion 36. Also, the switching set portion 20 and the speed control portion 36 can be constructed together. As a result, a switching timing of the filter switching portion 18 is decided in response to the setting of the speed control portion 36. The drawing update speed gives an image switching speed, i.e., a time required to update a sheet of image. Thus, if this update speed is accelerated, the image can be switched smoothly while the S/N ratio tends to become worse because the exposure time is shortened inevitably. In contrast, if this update speed is decelerated, the switching of the image becomes slow while there is such a tendency that the clear image with the good S/N ratio can be obtained because the exposure time is prolonged. As a result, if the user adjusts the update speed to a desired value according to the purpose of the observation and the object, the well-balanced observation image can be obtained. The user can input a desired numerical value from a drawing update speed setting box 36A provided under the image display area G as one mode of the speed control portion 36. Alternately, the user can choose a desired value from the previously set choices by using a means such as a drop-down list, or the like. The filter switch portion 18 switches respective filter sets at a time interval designated via the drawing update speed setting box 36A when the image is taken. In this case, the switching time for each filter set is set constant, but the switching time for the particular filter set only can be adjusted. Accordingly, the switching time of the filter set that needs a long exposure time is set long but the switching time of the filter set that needs merely a short exposure time is set short, so that the drawing update time can be suppressed in total. Also, various designations are not limited to the numerical designation, and the display result to be obtained can be represented sensually. For instance, if the designation is chosen from expressions such as "clear the image", "smooth the image update", and the like by the user, it is possible for the user to understand easily the meaning of setting. Further, the automatic setting to set the optimum value on the system side may be employed to set the drawing update speed.

Also, the type of the filter set that is set in the fluorescence microscope can be displayed on the screen. In the example in FIG.4, the filter set display box 62 is provided under the drawing update speed setting box 36A. The name indicating the filter set being set now in the fluorescence microscope is input here. In this example, the filter set is displayed by the general name of the excitation light. In the present embodiment, the filter holder 56 can be switched in four stages, and three filter sets being set in the filter holder 56 and the bright-field observation state in which the image is taken without the filter set can be switched. The names of the filter set displayed herein are used as the notation in the filter set group 38A on the right side of the screen in FIG.4. Also, in addition to the method of inputting the name of the filter set selected by the user, the method of providing the choices by a drop-down list, or the like in the filter set display box 62 and then causing the user to select any of them, the method of displaying automatically the name of the filter set by sensing the type of the selected filter set on the fluorescence microscope side, and the like may be employed. For example, the memory such as the IC for recording information of the name of the filter set, etc. is provided every filter set, and then the fluorescence microscope side decides the type by reading this information and displays such type on the display portion 24. Also, in addition to the type of the excitation light source, the wavelength of the excitation light, the wavelength of the fluorescence, the name of the applied fluorescent dye, the model number of the excitation filter or the absorption filter, etc. can be employed as the name of the filter set. In addition, these notations may be switched in display respectively. Also, in addition to the method of inputting these information manually by the user, the method of causing the fluorescence microscope side to read these information given to the filter set side, the method of causing the fluorescence microscope side to search these information based on one information and display such information, or the like can be employed appropriately. For example, a look-up table in which the type of the fluorescent dye and the type of the light source that can emit the excitation light corresponding to this fluorescent dye, the fluorescence, the filter name, etc. are recorded to correlate with each other is provided to the memory on the fluorescence microscope side, and then the correlated information are extracted based on one information by consulting this table. Also, if plural pieces of related information are present, the fluorescence microscope system may cause the user to choose the information. For example, if a plurality of filters available for one fluorescent dye are present, the fluorescence microscope system causes the user to choose any one from the offered choices.

Further, a color correction portion 42 for applying a color correction to the image displayed on the display portion 24 can also be provided. The "color correction" is the technique that emphasizes the particular fluorescent color or weakens other fluorescent colors in display by emphasize or deemphasize the signal acquired by the particular filter set. According to this correction, the to-be-observed portion in the superposed image can be displayed emphatically, and thus the user's observation can be facilitated. In the example in FIG.4, the color correction portion 42 is provided under the exposure time control portion 60. The fluorescent light that is decided in the color correction portion 42 to accept the color correction is displayed emphatically. In addition to the above, the already-known color processing such as the gamma correction applied to the desired fluorescent color to adjust the shade of color, the subtractive color process applied to the selected fluorescent color, or the like can be employed appropriately as the color correction.

Also, in addition to the auto mode of taking the image automatically while switching each of all filter sets, a manual mode of taking the image only by using the desired filter set selected in taking the image is provided. The setting of the manual mode is executed by using the filter set selecting means, and the user designates the filter set used in taking the image. Alternately, the imaging ON/OFF may be switched every filter set. The layout portion 38 can be utilized as the filter set selecting means in such a way that, for example, only the necessary filter set is allocated to the image display area G on the screen in FIG.4 and also the filter sets not used in taking the image are still kept in the well of the filter set group 38A or the icon of the filter set that has already been allocated to the image display area G is returned to the well of the filter set group 38A. Otherwise, if the icon of the filter set that has already been registered on the image display area G is selected and then the deleting process is applied to such icon by clicking the right button of the mouse, or the like, the mode is shifted automatically to the manual mode. Since the filter set switching operation and the image superposing process can be reduced by taking the image via the necessary filter set, the drawing can be carried out at a higher speed.

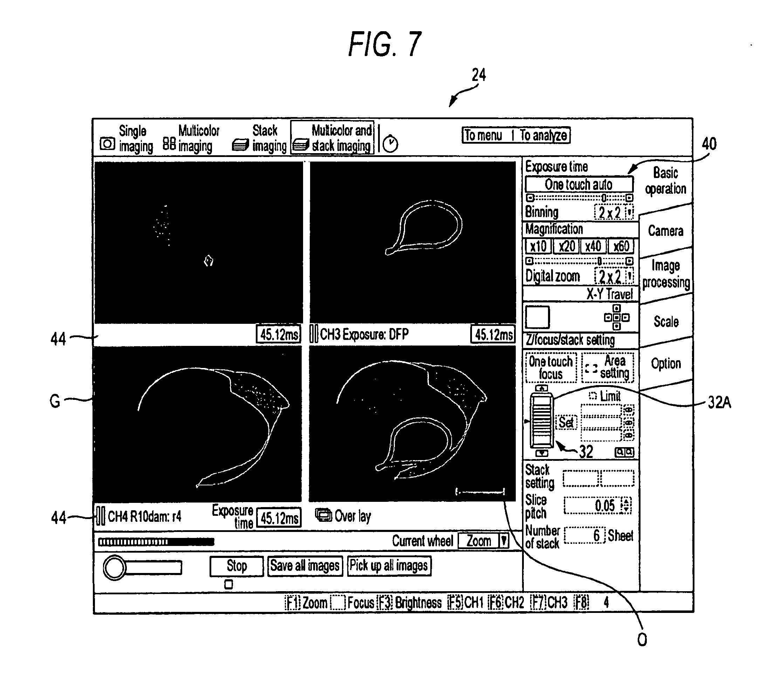

Also, an image adjustment portion 40 for controlling the taken image is provided. An example of another setting screen having the image adjustment portion 40 is shown in FIG.7. FIG.7 is an example showing a GUI image of a fluorescence microscope image display program according to another embodiment of the present invention. In the example of the setting screen shown in FIG.7, switches for adjusting image adjustment parameters including the position, height, magnification, brightness and contrast for movement of field view are provided as the image adjustment portion 40 to the right of the image display area G. The image adjustment parameters may be adjusted by the user or automatically set to optimum values. For example, the "One-touch Auto" button to automatically adjust the exposure time and the "One-Touch Focus" button to automatically adjust the focus are provided. Among the image adjustment parameters, the position is adjusted in terms of travel in X and Y directions, allowing a shift of the eyepoint of an image being displayed. For example, in the screen of the image display area G, dragging an arbitrary position with a mouse and shifting the position in predetermined direction moves the position or eyepoint. The specimen loading portion 28 travels in X and Y directions in accordance with the travel amount of the mouse. The up/down and right/left button as well as the crosshair button may be used to move the specimen loading portion 28. A guide may be provided for displaying the section where the currently displayed eyepoint is located in the display area.
Adjustment of height is made by determining the relative distance in Z direction, that is, between the specimen W and the optical system 10 (objective lens 50). This adjusts the focus of the image. Through adjustment of height on the height specification section, the specimen loading portion 28 is vertically moved. Adjustment of height or magnification may be made continuously and visually by using a slider, a level meter, or a scale. The example in Fig. 7 uses a slider 32A as a height specification section. In any case, the specimen loading portion 28 is moved for adjustment, the same result is obtained by moving the optical system 10.
The adj ustment of the magnification is executed by the imaging lens 52. In this example, the imaging lens 52 is constructed by a zoom lens and the magnification can be varied successively from 10 times to 100 times by a single imaging lens 52. Alternately, several types of objective lenses 50 may be switched by using the revolver, the slider, or the like, or the objective lens may be constructed by the zoom lens. For example, the magnification can be changed by switching manually or automatically plural types of objective lenses that are provided to the rotary revolver. Also, the dedicated objective lens for the phase difference observation, the differential interference observation, the bright-field observation, the dark-field observation, or the like may be employed in response to the purpose of observation. In the example in FIG.7, the objective lens 50 can be exchangeably fitted by using the setscrews, or the like, and thus objective lens 50 can be replaced to fit for various application fields.

In addition, an indicator 44 for indicating the current operation state may be displayed every image display area G. In the example in FIG.3, an icon indicating the processed condition of the image is displayed on the upper left portion of the image display area G as the indicator 44. This icon is changed in response to the contents of the process. In the example in FIG.3, a triangle such as a mark ">", or the like is displayed on the upper left portion of the image display area G if the image is being updated, and a mark "| |" is displayed if the update is ended to wait for the next update. Also, the screen on which the image is being taken may be indicated by a mark "•", the screen on which no updating operation is executed may be indicated by a mark "□", and others. In addition, in the example in FIG.7, the indicator 44 is displayed on the lower left portion of the image display area G respectively, and a mark consisting of a plurality of overlapped rectangular frames as the indicator 44 indicating the superposed image and the text "overlay" are displayed in the superposed image display area O positioned on the lower right portion in FIG.7. Therefore, the user can grasp the process conditions in respective image display areas G. Further, a setting indicator 44B indicating the setting and the display contents in each image display area G may be added. For example, in the example in FIG.3, an icon showing that the lower right image display area G is set as the superposed image display area O is displayed as the setting indicator 44B on the upper right portion of the image display area G. In addition, a notation of the name of the filter set, or the like may be displayed by the text, and an icon whose color is changed in response to the fluorescent color may be added. It is needless to say that shapes and arranged positions of these indicators can be varied appropriately. Also, ON/OFF of these displays may be switched.

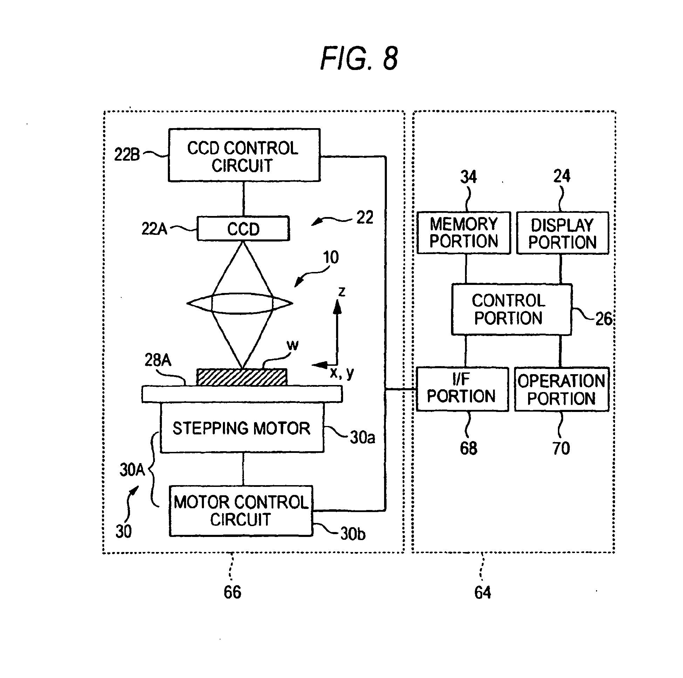

Fig. 8 shows an exemplary block diagram of a control system 64 of the fluorescence microscope. In Fig. 8, the details of the optical system 10 are not shown. As shown in Fig. 8, the fluorescence microscope comprises as an imaging system 66: a stage 28A as a form of a specimen loading portion 28 on which a specimen is placed; a stage lifter 30A for moving the stage 28A; an optical system 10 for exciting a fluorescent dye with excitation light irradiated onto a specimen W placed on the stage 28A and forming a fluorescence on an imaging portion 22; a CCD 22A as a form of the imaging portion 22 for electrically reading, per two-dimensionally arranged pixel, a fluorescence incident via the optical system 10 from the specimen W fixed to the stage 28A; and a CCD control circuit 22B for performing driving control of the CCD 22A. The stage llifter 30A is a form of a height adjustment portion 30 and includes, for example, a stepping motor 30a and a motor control portion 30b for controlling up-and-down movements of the stepping motor 30a. The stepping motor 30a moves the stage 28A in the z axis direction as an optical axis direction and in X and Y directions as a plane perpendicular to the optical axis direction.
The fluorescence microscope comprises as a control system 64 for controlling the imaging system 66: a I/F portion 68; a memory portion 34; a display portion 24; an operation portion 70; and a control portion 26. The I/F portion 68 communicates an electric signal carrying data with the imaging system 66 by way of communications means. The memory portion 34 retains image data electrically read by the imaging portion 22. The display portion 24 displays a taken image, a synthesized image, or various setting. The operation portion 70 performs operation such as input and setting based on the screen displayed on the display portion 24. The control portion 26 controls the imaging system 66 in accordance with the conditions set on the operation portion 70 to perform imaging as well as synthesizes acquired image data to generate a 3D image or performing various processing such as image processing. The imaging system 66 and the control system 64 may be included to complete operation in the fluorescence microscope alone. Or, as shown in Fig. 4, an external connection device 58 such as a computer 58A may be connected to a fluorescence microscope 200 and the fluorescence microscope 200 may operate the imaging system while the external connection device 58 may operate the control system. Members of the imaging system and those of the control system are not strictly distinguished; for example the memory portion may be included in the imaging system, or the CCD control circuit or motor control portion may be included in the control system.
The operation portion 70 is connected, either wiredly or wirelessly, to a fluorescence microscope or a computer of a fluorescence microscope system, or is fixed to the computer. Examples of a general operation portion includes a mouse, a keyboard, and various pointing devices such as a slide pad, TrackPoint, a tablet, a joystick, a console, a jog dial, a digitizer, a light pen, a ken-key pad, a touch pad, and Acupoint. Such operation portions may be used for operation of a fluorescence microscope image display program as well as operation of a fluorescence microscope and its peripherals. A display for representing an interface screen may include a touch screen or a touch panel for the user to directly touch the screen with his/her finger for data input or system operation. Voice input means or other existing input means may be used instead or in combination with the above means. In the example of Fig. 8, the operation portion 70 includes a mouse (refer to Fig. 2). Use of the mouse allows operation of a slider 32A as a height specification section 32 or focusing on an image and other operations. In this way, by displaying an operation menu together with an image on the display portion 24 and selecting an operation item and operating a function on the screen, it is possible for the user to correctly grasp the operation details and states without operation errors, thus providing a tactile and easy operation system.

The stereoscopic image (stack image) containing three- dimensional information can be acquired by taking a plurality of images while moving the specimen in the optical axis by the fluorescence microscope, i.e., changing the height of the specimen, and then synthesizing these images. Since the stack image has a depth in the optical axis, the user can observe a surface condition of the specimen W. Especially, in the multicolor fluorescent observation, the expressed locations, etc. of the fluorescent dye can be observed cubically to get a depth. An example of a screen from which the stereoscopic image having the information in the height direction is acquired is shown in FIG.7. As shown in FIG.7, the user decides the position (view field) of the image to be observed, and then designates a moving range and a moving width specified by the height specify portion 32. If the moving width is set finely, the detailed stack image can be synthesized but a process time required until the stack image can be acquired is prolonged. Also, if the moving width is set roughly, the stack image can be synthesized in a short time but the stack image also becomes rough. Therefore, the user must set the optimum conditions according the purpose and the demand. The height specify portion 32 in FIG.5 is constructed by the slider 32A that is able to specify the height continuously, and thus the user can easily designate the height visually. The moving range is specified by using an upper height and a lower height while using the slider 32A, and also the user can designate a moving interval indicating a moving pitch in the height direction. For example, the upper limit of the height is decided by moving the slider 32A up to the upper limit of the height of the moving range by means of the mouse, or the like and then clicking the button of the mouse. Similarly, the lower limit of the height is decided and also the moving width is decided. The system may be constructed such that these values are input directly as the numerical values. Also, since the image being displayed in the image display area G is also set to that height correspondingly when the slider 32A is adjusted, the user can designate the upper limit and the lower limit of the height while conforming a degree of focusing. Alternately, in addition to the designation of the upper limit and the lower limit of the height, the method of designating a center position of the image in the vertical direction or the method of designating the number of sheets of the acquired images may be employed. When the user presses a stack start button after the height conditions are decided in this manner, the imaging is started while causing the specimen to move in the height direction to keep the set moving width, and then the images taken every height are held in the memory portion 34. Then, when the imaging is ended, the stereoscopic image having the height information is synthesized based on the acquired image data. This stereoscopic image can be displayed cubically as the image having a depth, or the user's viewing point on the image can be changed by rotating the stereoscopic image, or the like. As a result, the user can observe the positions of the fluorescent dye not planarly but cubically, and also the user can grasp the surface condition of the specimen.

The fluorescence microscope and the observation method using the fluorescence microscope system of the present present invention is applicable to for example a fluorescence antibody test where the serum and cell nucleus of a patient is caused to react with each other, then a fluorescence indicator is added and an antinuclear antibody is observed on a fluorescence microscope, and whether the antibody is positive or negative is determined based on the fluorescence of the antinuclear antibody.

## Claims

1. A fluorescence microscope comprising:
a plurality of filter sets (1), each filter set including a different combination of a predetermined excitation filter (12), a dichroic mirror (14), and an absorption filter (16), as optical members of an optical system (10);
a filter switch portion (18) adapted to switch sequentially the filter sets (1) at a predetermined timing;
a switching set portion (20) adapted to set a timing at which the filter switch portion (18) switches the filter sets (1);
a filter-set selecting section adapted to select a filter set group (38A) from the plurality of filter sets (1);
an imaging portion (22) adapted to take an image of a specimen (W) as an observation object by using the filter sets (1) that are selected by the filter-set selecting section and that are sequentially set on an optical path of the optical system (10) by the filter switch portion (18);
a display portion (24) having a plurality of image display areas (G) adapted to display images taken by the imaging portion (22); and
a control portion (26) adapted to generate a superposed image that is formed by superposing images taken by the imaging portion (22);
wherein the fluorescence microscope is configured such that the image taken by using a first filter set corresponding to any one of the filter sets (1) of the filter set group (38A) is displayed in one of the image display areas (G), and a superposed image that is formed by superposing the images taken by using each respective filter set (1) of the filter set group (38A) is displayed in another of the image display areas (O) such that respective images are updated sequentially so that a monochromatic image taken by using said first filter set (1) and the superposed image are observed simultaneously in almost real time;
wherein the filter selecting section is adapted for user designation of the filter set, and the filter switch portion is adapted to switch sequentially the filter sets selected by the filter-set selecting portion ; and
wherein the imaging portion (22) takes an image via every selected filter set (1) of the filter set group 38A in synchronism with the timing which is set by the switching set portion (20) and at which the filter switch portion (18) switches the filter sets, and then the respective monochromatic and/or superposed images are automatically updated and displayed in the image display areas (G, O).

2. A fluorescence microscope according to claim 1, further comprising:
a specimen load portion (28) for placing a specimen (W) thereon;
a height adjustment portion (30) for changing a distance between the specimen load portion (28) and the optical system (10) in an optical axis direction;
a height specify portion (32) for specifying a moving range and a moving width as conditions applied when the height adjustment portion (30) changes the distance;
a memory portion (34) for storing the image taken by the imaging portion (22) together with positional information for every predetermined position in the optical axis direction; and
a control portion (26) for synthesizing a plurality of images stored in the memory portion (34) based on the positional information to generate a stack image having three-dimensional information;
wherein the image is taken by the imaging portion (22) in respective positions while changing a distance between the specimen load portion (28) and the optical system (10) in the optical axis direction by the height adjustment portion (30) under conditions that are specified by the height specify portion (32), and then the stack image that is synthesized by the control portion (26) based on taken images is displayed on the display portion (24).

3. A fluorescence microscope according to any of claims 1 to 2, further comprising:
a gain controlling section for controlling electrically a quantity of fluorescent light of the sensed specimen (W) such that a lightness of the image taken by the imaging portion (22) by using the filter sets (1) exceeds a predetermined value.

4. A fluorescence microscope according to any of claims 1 to 3, further comprising:
a speed control portion (36) for controlling an update speed of the image that is displayed on the display portion (24).

5. A fluorescence microscope according to any of claims 1 to 4, further comprising:
a layout portion (38) for allocating an area, on which the image taken by using predetermined filter sets (1) is displayed, to a desired area of the image display areas (G).

6. A fluorescence microscope according to any of claims 1 to 5, further comprising:
an image adjustment portion (40) for controlling at least any of image control parameters of a position, a height, and a magnification applied to a scrolling, to control the image displayed on the display portion (24).

7. A fluorescence microscope according to any of claims 1 to 6, wherein each of a plurality of filter sets (1) includes a monochromatic filter set (1) that corresponds to any fluorescent color of plural types of fluorescent dyes introduced into the specimen (W) respectively.

8. A fluorescence microscope according to any of claims 1 to 7, further comprising:
a color correction portion (42) for adjusting an intensity of a signal that is acquired by using a particular filter set (1).

9. A fluorescence microscope according to any of claims 1 to 8, wherein an indicator (44) indicating a current operation condition is displayed in every image display area (G).

10. A fluorescence microscope according to any of claims 1 to 9, wherein the optical path of the specimen loading portion (28) and the optical system (10) are arranged in a darkroom space (46) that is shielded from a disturbance light.

11. A fluorescence microscope according to any of claims 1 to 10, wherein the imaging portion (22) includes light receiving elements that are arranged two-dimensionally.

12. A fluorescence microscope according to any of claims 1 to 11, wherein an excitation light source (48) for exciting a fluorescent substance contained in the specimen (W) is formed of an ultraviolet light-emitting diode.

13. An observation method using a fluorescence microscope system that executes a multicolor fluorescent observation to observe fluorescent lights, by introducing a plurality of fluorescent dyes having different fluorescent colors into a specimen and then exciting the fluorescent dyes by an excitation light, comprising steps of:
selecting a first filter set designated by a user with a filter-set selecting portion from a plurality of different types of filter sets (1), the filter sets (1) including combination of an excitation filter (12), a dichroic mirror (14), and an absorption filter (16) as optical members of an optical system (10), taking a first image by an imaging portion (22) by using the selected first filter set (1), and displaying said image in a predetermined designated image display area (G) out of a plurality of image display areas (G) on a display portion (24); and
taking a second image by using a second filter set (1) designated by a user with a filter-set selecting portion from the plurality of filter sets (1) and switched by a filter switch portion (18), and displaying the second image taken by the imaging portion (22) by using the second selected filter set (1) in another designated image display area (G), and also generating a superposed image of the first image and the second image and then displaying the superposed image in a superposed image display area (O);
wherein sequential switching is conducted by said filter switch portion (18) at a predetermined timing between the first and second filter sets selected by the filter-set selecting portion, and the imaging portion (22) sequentially takes first and second images via the first and second filter sets in synchronism with said timing ; and
wherein respective images that are displayed in the image display areas (G) and the superposed image display area (O) are updated sequentially by means of said sequentially taken first and second images, so that a monochromatic image taken by using each filter set (1) and the superposed image are observed simultaneously in almost real time.

14. An observation method using a fluorescence microscope system according to claim 13, further comprising steps of:
deciding a view field of an observation object, and setting a moving range and a moving width by which a distance between a specimen loading portion (28), on which the specimen (W) is loaded, and an optical system (10) in an optical axis direction is changed;
changing a distance in the optical axis direction for every moving width according to the setting; and
storing the superposed image together with positional information in the optical axis direction in a memory portion (34).

## Patentansprüche

1. Ein Fluoreszenzmikroskop, umfassend:
eine Vielzahl von Filtersätzen (1), wobei jeder Filtersatz eine verschiedene Kombination eines vorbestimmten Anregungsfilters (12), eines dichroitischen Spiegel (14) und eines Absorptionsfilters (16) umfasst, als optische Elemente eines optischen Systems (10);
einen Filterwechselteil (18), der eingerichtet ist, die Filtersätze (1) sequentiell bei vorbestimmten Zeitvorgaben zu wechseln;
einen Satzwechselteil (20), der eingerichtet ist, eine Zeitvorgabe zu setzen, zu der der Filterwechselteil (18) die Filtersätze (1) wechselt;
ein Filtersatzauswahlabschnitt, der eingerichtet ist, eine Filtersatzgruppe (38A) aus der Vielzahl von Filtersätzen (1) auszuwählen;
einen Abbildungsteil (22), der eingerichtet ist, ein Bild einer Probe als ein Beobachtungsobjekt unter Verwendung der Filtersätze (1) aufzunehmen, die durch den Filtersatzauswahlabschnitt ausgewählt und durch den Filterwechselteil (18) auf den optischen Weg des optischen Systems (10) gesetzt sind;
einen Anzeigeteil (24), der eine Vielzahl von Bildanzeigebereichen (G) aufweist, die eingerichtet sind, Bilder anzuzeigen, die durch den Abbildungsteil (22) aufgenommen sind; und
einen Kontrollteil (26), der eingerichtet ist, ein Überlagerungsbild zu erzeugen, das gebildet ist durch Überlagerung von Bildern, die durch den Abbildungsteil (22) aufgenommen sind;
wobei das Fluoreszenzmikroskop konfiguriert ist, so dass das Bild, das unter Verwendung eines ersten Filtersatzes aufgenommen ist, der irgendeinem der Filtersätze (1) der Filtersatzgruppe (38A) entspricht, in einem der Bildanzeigebereiche (G) angezeigt ist, und ein Überlagerungsbild, das durch Überlagerung der unter Verwendung eines jeweiligen Filtersatzes der Filtersatzgruppe (38A) aufgenommenen Bilder gebildet ist, in einem weiteren der Anzeigebereiche (O) angezeigt ist, so dass die jeweiligen Bilder sequentiell aktualisiert werden, so dass ein unter Verwendung des ersten Filtersatzes (1) aufgenommenes, monochromatisches Bild und das Überlagerungsbild gleichzeitig beinahe in Echtzeit beobachtet werden;
wobei der Filterauswahlabschnitt zur Benutzerbestimmung des Filtersatzes eingerichtet ist und der Filterwechselteil eingerichtet ist, die durch den Filtersatzauswahlteil ausgewählten Filtersätze sequentiell zu wechseln; und
wobei der Abbildungsteil (22) ein Bild mittels eines jeden ausgewählten Filtersatzes (1) der Filtersatzgruppe (38A) in Synchronizität mit der Zeitvorgabe aufnimmt, die durch den Satzwechselteil (20) gesetzt ist und zu welcher der Filterwechselteil (18) die Filtersätze wechselt, und dann die jeweiligen monochromatischen und/oder Überlagerungsbilder automatisch aktualisiert und in den Bildanzeigebereichen (G, O) angezeigt werden.

2. Ein Fluoreszenzmikroskop nach Anspruch 1, weiter umfassend:
einen Probenladeteil (28), um darauf eine Probe (W) zu platzieren;
einen Höheneinstellteil (30), um einen Abstand zwischen dem Probenladeteil (28) und dem optischen System (10) in Richtung der optischen Achse zu verändern,
einen Höhenspezifizierungsteil (32), um einen Bewegungsbereich und eine Bewegungsweite als Bedingungen zu spezifizieren, die angewendet werden, wenn der Höheneinstellteil (30) den Abstand verändert;
einen Speicherteil (34), um das durch den Abbildungsteil (22) aufgenommene Bild zusammen mit Positionsinformation für jede vorbestimmte Position in Richtung der optischen Achse zu speichern; und
einen Kontrollteil (26), um basierend auf der Positionsinformation eine Vielzahl von Bildern zu synthetisieren, die in dem Speicherteil (34) gespeichert sind, um ein Stapelbild zu erzeugen, das dreidimensionale Information hat;
wobei das Bild durch den Abbildungsteil (22) in jeweiligen Positionen während des Veränderns eines Abstands zwischen dem Probenladeteil (28) und dem optischen System (10) in Richtung der optischen Achse durch den Höheneinstellteil (30) unter Bedingungen aufgenommen ist, die durch den Höhenspezifizierungsteil (32) spezifiziert sind, und dann das Stapelbild, das durch den Kontrollteil (26) basierend auf den aufgenommenen Bildern synthetisiert ist, auf dem Anzeigeteil (24) angezeigt ist.

3. Ein Fluoreszenzmikroskop nach einem der Ansprüche 1 bis 2, weiter umfassend:
einen Verstärkungskontrollabschnitt, um elektrisch eine Fluoreszenzlichtmenge der abgetasteten Probe (W) zu kontrollieren, so dass eine Helligkeit des Bildes, das durch den Abbildungsteil (22) unter Verwendung des Filtersatzes (1) aufgenommen ist, einen vorbestimmten Wert übersteigt.

4. Ein Fluoreszenzmikroskop nach einem der Ansprüche 1 bis 3, weiter umfassend:
einen Geschwindigkeitskontrollteil (36), um eine Aktualisierungsgeschwindigkeit des Bildes zu kontrollieren, das auf dem Anzeigeteil (24) angezeigt ist.

5. Ein Fluoreszenzmikroskop nach einem der Ansprüche 1 bis 4, weiter umfassend:
einen Anordnungsteil (38), um einen Bereich, auf dem das unter Verwendung vorbestimmter Filtersätze (1) aufgenommene Bild angezeigt ist, zu einem gewünschten Bereich der Bildanzeigebereiche (G) zuzuweisen.

6. Ein Fluoreszenzmikroskop nach einem der Ansprüche 1 bis 5, weiter umfassend:
einen Bildanpassungsteil (40), um zumindest irgendeinen der Bildkontrollparameter einer Position, einer Höhe und einer Vergrößerung, angewendet auf einen Bildlauf, zu kontrollieren, um das auf dem Anzeigeteil (24) angezeigte Bild zu kontrollieren.

7. Ein Fluoreszenzmikroskop nach einem der Ansprüche 1 bis 6, wobei jeder einer Vielzahl von Filtersätzen (1) einen monochromatischen Filtersatz (1) umfasst, der irgendeiner Fluoreszenzfarbe verschiedener Arten von Fluoreszenzfarbstoffen entspricht, die jeweils in die Probe (W) eingebracht sind.

8. Ein Fluoreszenzmikroskop nach einem der Ansprüche 1 bis 7, weiter umfassend:
einen Farbkorrekturteil (42), um eine Intensität eines Signals anzupassen, das durch Verwendung eines bestimmten Filtersatzes (1) erlangt ist.

9. Ein Fluoreszenzmikroskop nach einem der Ansprüche 1 bis 8, wobei ein Indikator (44), der eine gegenwärtige Betriebsbedingung angibt, in jedem Bildanzeigebereich (G) angezeigt ist.

10. Ein Fluoreszenzmikroskop nach einem der Ansprüche 1 bis 9, wobei der optische Weg des Probenladeteils (28) und des optischen Systems (10) in einem Dunkelkammerraum (46) angeordnet sind, der von Störungslicht abgeschirmt ist.

11. Ein Fluoreszenzmikroskop nach einem der Ansprüche 1 bis 10, wobei der Abbildungsteil (22) Lichtaufnahmeelemente umfasst, die zweidimensional angeordnet sind.

12. Ein Fluoreszenzmikroskop nach einem der Ansprüche 1 bis 11, wobei eine Anregungslichtquelle (48) zum Anregen einer fluoreszierenden, in der Probe (W) enthaltenen Substanz aus einer Ultraviolett-Leuchtdiode gebildet ist.

13. Ein Beobachtungsverfahren, das ein Fluoreszenzmikroskopsystem verwendet, das eine Vielfarbfluoreszenzbeobachtung ausführt, um fluoreszierende Lichter zu beobachten, indem eine Vielzahl von fluoreszierenden Farbstoffen mit verschiedenen Fluoreszenzfarben in eine Probe eingebracht werden und dann die fluoreszierenden Farbstoffe durch ein Anregungslicht angeregt werden, wobei das Verfahren die Schritte umfasst:
Auswählen eines ersten Filtersatzes, der durch einen Benutzer mit einem Filtersatzauswahlteil aus einer Vielzahl von verschiedenen Arten von Filtersätzen (1) bestimmt wird, wobei die Filtersätze (1) Kombinationen eines Anregungsfilters (12), eines dichroitischen Spiegels (14) und eines Absorptionsfilters (16) als optische Elemente eines optischen Systems (10) umfassen, Aufnehmen eines ersten Bilds durch einen Abbildungsteil (22) unter Verwendung des ausgewählten ersten Filtersatzes (1) und Anzeigen des Bildes in einem vorbestimmten bezeichneten Bildanzeigebereich (G) aus einer Vielzahl von Bildanzeigebereichen (G) auf einem Anzeigeteil (24); und
Aufnehmen eines zweiten Bilds unter Verwendung eines zweiten Filtersatzes (1), der durch einen Benutzer mit einem Filtersatzauswahlteil aus der Vielzahl von Filtersätzen (1) bestimmt und durch einen Filterwechselteil (18) gewechselt wird, und Anzeigen des zweiten Bildes, das von der Abbildungseinheit (22) unter Verwendung des zweiten ausgewählten Filtersatzes (1) aufgenommen ist, in einem weiteren bezeichneten Bildanzeigebereich (G) und auch Erzeugen eines Überlagerungsbildes des ersten Bildes und des zweiten Bildes und dann Anzeigen des Überlagerungsbildes in einem Überlagerungsbildanzeigebereich (O);
wobei sequentielles Wechseln durch den Filterwechselteil (18) zu einer vorbestimmten Zeitvorgabe zwischen dem ersten und zweiten Filtersatz ausgeführt wird, die durch den Filtersatzauswahlteil ausgewählt werden, und der Abbildungsteil (22) sequentiell erste und zweite Bilder mittels des ersten und zweiten Filtersatzes in Synchronizität mit der Zeitvorgabe aufnimmt; und
wobei jeweilige Bilder, die in den Bildanzeigebereichen (G) und dem Überlagerungsbildanzeigebereich (O) angezeigt werden, sequentiell aktualisiert werden vermittels der sequentiell aufgenommenen ersten und zweiten Bilder, so dass ein monochromatisches Bild, das unter Verwendung eines jeden Filtersatzes (1) aufgenommen wird, und das Überlagerungsbild gleichzeitig beinahe in Echtzeit beobachtet werden.

14. Ein Beobachtungsverfahren, das ein Fluoreszenzmikroskopsystem verwendet, nach Anspruch 13, wobei das Verfahren weiter die Schritte umfasst:
Entscheiden eines Sichtfelds eines Beobachtungsobjekts und Setzen eines Bewegungsbereichs und einer Bewegungsweite, durch welche ein Abstand zwischen einem Probenladeteil (28), auf welchem eine Probe (W) geladen ist, und einem optischen System (10) in einer Richtung der optischen Achse verändert werden;
Verändern eines Abstands in Richtung der optischen Achse für jede Bewegungsweite gemäß dem Setzen; und
Speichern des Überlagerungsbildes zusammen mit Positionsinformation in Richtung der optischen Achse in einem Speicherteil (34).

## Revendications

1. Microscope à fluorescence comprenant :
une pluralité d'ensembles de filtres (1), chaque ensemble de filtres comprenant une combinaison différente d'un filtre d'excitation (12) prédéterminé, d'un miroir dichroïque (14) et d'un filtre d'absorption (16), en tant qu'éléments optiques d'un système optique (10) ;
une partie de commutation de filtre (18) adaptée pour commuter séquentiellement les ensembles de filtres (1) selon une synchronisation prédéterminée ;
une partie de détermination de commutation (20) adaptée pour déterminer une synchronisation selon laquelle la partie de commutation de filtre (18) commute les ensembles de filtres (1);
une section de sélection d'ensemble de filtres adaptée pour sélectionner un groupe d'ensembles de filtres (38A) parmi la pluralité d'ensembles de filtres (1) ;
une partie de formation d'image (22) adaptée pour prendre une image d'un spécimen (W) en tant qu'objet d'observation en utilisant les ensembles de filtres (1) qui sont sélectionnés par la section de sélection d'ensemble de filtres et qui sont placés séquentiellement sur un trajet optique du système optique (10) par la partie de commutation de filtre (18) ;
une partie d'affichage (24) comportant une pluralité de zones d'affichage d'image (G) adaptée pour afficher les images prises par la partie de formation d'image (22) ; et
une partie de commande (26) adaptée pour générer une image superposée qui est formée en superposant des images prises par la partie de formation d'image (22) ;
dans lequel le microscope à fluorescence est configuré de sorte que l'image prise en utilisant un premier ensemble de filtres correspondant à l'un quelconque des ensembles de filtres (1) du groupe d'ensembles de filtres (38A) soit affichée dans l'une des zones d'affichage d'image (G), et qu'une image superposée qui est formée en superposant les images prises en utilisant chaque ensemble de filtres (1) respectif du groupe d'ensembles de filtres (38A) soit affichée dans une autre des zones d'affichage d'image (O) de sorte que les images respectives soient mises à jour séquentiellement de sorte qu'une image monochrome prise en utilisant ledit premier ensemble de filtres (1) et l'image superposée soient observées simultanément pratiquement en temps réel ;
dans lequel la section de sélection de filtre est adaptée pour une désignation par l'utilisateur de l'ensemble de filtres, et la partie de commutation de filtre est adaptée pour commuter séquentiellement les ensembles de filtres sélectionnés par la partie de sélection d'ensemble de filtres ; et
dans lequel la partie de formation d'image (22) prend une image via chaque ensemble de filtres (1) sélectionné du groupe d'ensembles de filtres (38A) en synchronisation avec la synchronisation qui est déterminée par la partie de détermination de commutation (20) et selon laquelle la partie de commutation de filtre (18) commute les ensembles de filtres, et ensuite les images monochromes et/ou superposées respectives sont automatiquement mises à jour et affichées dans les zones d'affichage d'image (G, O).

2. Microscope à fluorescence selon la revendication 1, comprenant en outre :
une partie de chargement de spécimen (28) pour placer un spécimen (W) sur celle-ci ;
une partie d'ajustement de hauteur (30) pour modifier une distance entre la partie de chargement de spécimen (28) et le système optique (10) dans une direction d'axe optique ;
une partie de spécification de hauteur (32) pour spécifier une plage de mouvement et une largeur de mouvement en tant que conditions appliquées lorsque la partie d'ajustement de hauteur (30) modifie la distance ;
une partie de mémorisation (34) pour mémoriser l'image prise par la partie de formation d'image (22) avec des informations de position à chaque position prédéterminée dans la direction d'axe optique ; et
une partie de commande (26) pour synthétiser une pluralité d'images mémorisées dans la partie de mémorisation (34) sur la base des informations de position pour générer une image d'empilage comportant des informations tridimensionnelles ;
dans lequel l'image est prise par la partie de formation d'image (22) à des positions respectives tout en modifiant une distance entre la partie de chargement de spécimen (28) et le système optique (10) dans la direction d'axe optique par la partie d'ajustement de hauteur (30) dans des conditions qui sont spécifiées par la partie de spécification de hauteur (32), et ensuite l'image d'empilage qui est synthétisée par la partie de commande (26) sur la base des images prises est affichée sur la partie d'affichage (24).

3. Microscope à fluorescence selon l'une quelconque des revendications 1 et 2, comprenant en outre :
une section de commande de gain pour commander électriquement une quantité de lumière fluorescente du spécimen (W) détecté de sorte qu'une clarté de l'image prise par la partie de formation d'image (22) en utilisant les ensembles de filtres (1) dépasse une valeur prédéterminée.

4. Microscope à fluorescence selon l'une quelconque des revendications 1 à 3, comprenant en outre :
une partie de commande de vitesse (36) pour commander une vitesse de mise à jour de l'image qui est affichée sur la partie d'affichage (24).

5. Microscope à fluorescence selon l'une quelconque des revendications 1 à 4, comprenant en outre :
une partie d'agencement (38) pour attribuer une zone, sur laquelle l'image prise en utilisant des ensembles de filtres (1) prédéterminés est affichée, à une zone souhaitée des zones d'affichage d'image (G).

6. Microscope à fluorescence selon l'une quelconque des revendications 1 à 5, comprenant en outre :
une partie d'ajustement d'image (40) pour commander au moins l'un quelconque de paramètres de commande d'image consistant en une position, une hauteur et un grossissement appliqué à un défilement, pour commander l'image affichée sur la partie d'affichage (24).

7. Microscope à fluorescence selon l'une quelconque des revendications 1 à 6, dans lequel chacun d'une pluralité d'ensembles de filtres (1) comprend un ensemble de filtres monochromes (1) qui correspond à n'importe quelle couleur fluorescente de plusieurs types de colorants fluorescents introduits dans le spécimen (W), respectivement.

8. Microscope à fluorescence selon l'une quelconque des revendications 1 à 7, comprenant en outre :
une partie de correction de couleur (42) pour ajuster une intensité d'un signal qui est acquis en utilisant un ensemble de filtres (1) particulier.

9. Microscope à fluorescence selon l'une quelconque des revendications 1 à 8, dans lequel un indicateur (44) indiquant une condition de fonctionnement actuelle est affiché dans chaque zone d'affichage d'image (G).

10. Microscope à fluorescence selon l'une quelconque des revendications 1 à 9, dans lequel le trajet optique de la partie de chargement de spécimen (28) et le système optique (10) sont agencés dans un espace de chambre noire (46) qui est protégé d'une lumière parasite.

11. Microscope à fluorescence selon l'une quelconque des revendications 1 à 10, dans lequel la partie de formation d'image (22) comprend des éléments de réception de lumière qui sont agencés de manière bidimensionnelle.

12. Microscope à fluorescence selon l'une quelconque des revendications 1 à 11, dans lequel une source de lumière d'excitation (48) pour exciter une substance fluorescente contenue dans le spécimen (W) est constituée d'une diode électroluminescente ultraviolette.

13. Procédé d'observation en utilisant un système de microscope à fluorescence qui exécute une observation fluorescente multicolore pour observer des lumières fluorescentes, en introduisant une pluralité de colorants fluorescents ayant différentes couleurs fluorescentes dans un spécimen et en excitant ensuite les colorants fluorescents par une lumière d'excitation, comprenant les étapes consistant à :
sélectionner un premier ensemble de filtres désigné par un utilisateur au moyen d'une partie de sélection d'ensemble de filtres parmi une pluralité de types différents d'ensembles de filtres (1), les ensembles de filtres (1) comprenant une combinaison d'un filtre d'excitation (12), d'un miroir dichroïque (14) et d'un filtre d'absorption (16) en tant qu'éléments optiques d'un système optique (10), prendre une première image par une partie de formation d'image (22) en utilisant le premier ensemble de filtres (1) sélectionné, et afficher ladite image dans une zone d'affichage d'image (G) désignée prédéterminée parmi une pluralité de zones d'affichage d'image (G) sur une partie d'affichage (24) ; et
prendre une deuxième image en utilisant un deuxième ensemble de filtres (1) désigné par un utilisateur au moyen d'une partie de sélection d'ensemble de filtres parmi la pluralité d'ensembles de filtres (1) et commutés par une partie de commutation de filtre (18), et afficher la deuxième image prise par la partie de formation d'image (22) en utilisant le deuxième ensemble de filtres (1) sélectionné dans une autre zone d'affichage d'image (G) désignée, et générer également une image superposée de la première image et de la deuxième image et afficher ensuite l'image superposée dans une zone d'affichage d'image superposée (O);
dans lequel une commutation séquentielle est effectuée par ladite partie de commutation de filtre (18) selon une synchronisation prédéterminée entre les premier et deuxième ensembles de filtres sélectionnés par la partie de sélection d'ensemble de filtres, et la partie de formation d'image (22) prend séquentiellement des première et deuxième images via les premier et deuxième ensembles de filtres en synchronisation avec ladite synchronisation ; et
dans lequel les images respectives qui sont affichées dans les zones d'affichage d'image (G) et la zone d'affichage d'image superposée (O) sont mises à jour séquentiellement au moyen desdites première et deuxième images prises séquentiellement, de sorte qu'une image monochrome prise en utilisant chaque ensemble de filtres (1) et l'image superposée soient observées simultanément pratiquement en temps réel.

14. Procédé d'observation en utilisant un système de microscope à fluorescence selon la revendication 13, comprenant en outre les étapes consistant à :
décider d'un champ de vision d'un objet d'observation, et déterminer une plage de mouvement et une largeur de mouvement desquelles une distance entre une partie de chargement de spécimen (28), sur laquelle le spécimen (W) est chargé, et un système optique (10) dans une direction d'axe optique est modifiée ;
modifier une distance dans la direction d'axe optique à chaque largeur de mouvement selon la détermination ; et
mémoriser l'image superposée avec des informations de position dans la direction d'axe optique dans une partie de mémorisation (34).
